(19) Europäisches Patentamt
European Patent Office
Office européen des brevets

(11) Publication number: 0 345 857 A1

# (12) EUROPEAN PATENT APPLICATION

(21) Application number: 89201345.9

(51) Int. Cl.4: C08L 73/00 , C08L 27/16

(22) Date of filing: 25.05.89

(30) Priority: 08.06.88 US 203973

(43) Date of publication of application: 13.12.89 Bulletin 89/50

(84) Designated Contracting States: BE DE FR GB IT NL

(71) Applicant: SHELL INTERNATIONALE RESEARCH MAATSCHAPPIJ B.V.
Carel van Bylandtlaan 30
NL-2596 HR Den Haag(NL)

(72) Inventor: Gergen, William Peter
11311 Hylander
Houston Texas 77007(US)
Inventor: Lutz, Robert Gardiner
632 Vista Grande Place
Santa Rosa California 95401(US)

(74) Representative: Aalbers, Onno et al
P.O. Box 302
NL-2501 CH The Hague(NL)

## (54) Polyketone polymer composition.

(57) Non-miscible blends of (a) a linear alternating polymer of carbon monoxide and at least one ethylenically unsaturated compound with (b) a polyvinylidene fluoride polymer of predominantly vinylidene fluoride, exhibit improved appearance, melt stability, and impact resistance.

EP 0 345 857 A1

# POLYKETONE POLYMER COMPOSITION

This invention relates to a polyketone polymer composition comprising a linear alternating polymer of carbon monoxide and at least one ethylenically unsaturated compound.

The class of polymers of carbon monoxide and olefins has been known for some time.

More recently, the class of linear alternating polymers of carbon monoxide and at least one ethylenically unsaturated compound, e.g. polymers of carbon monoxide and ethene or of carbon monoxide, ethene and propene, has become of greater interest in part because of the greater availability of the polymers. These polymers, often referred to as polyketones or polyketone polymers, have been shown to be of the repeating formula --CO-(A)- where A is the moiety of unsaturated compound polymerized through the ethylenic unsaturation. For example, when the comonomer is ethene, the polymer is represented by the repeating formula
$-CO\{CH_2-CH_2\}$. A process for the more recent production is illustrated by EP-121,965 and EP-181,014.

The resulting polymers are relatively high molecular weight thermoplastics having established utility in the production of shaped articles such as containers for food and drink and internal and external parts for automotive applications, which articles are produced by processing the polyketone polymer by known methods. For some particular applications it has been found desirable to have properties which are somewhat different from those of the polyketone polymer. It would be an advantage to retain the more desirable properties of the polyketone polymer and yet improve other properties.

In particular, it would be an advantage to improve on the melt stability, the appearance and the impact resistance.

It has now been found that this improvement is brought about by the addition of a specific polymer, namely a polyvinylidene fluoride, to the polyketone.

Accordingly, the present invention relates to a polyketone polymer composition, characterized by comprising a non-miscible blend of

(a) a linear alternating polymer of carbon monoxide and at least one ethylenically unsaturated compound, and

(b) a polyvinylidene fluoride polymer.

The polyketone polymers which are employed as one component of the blends of the invention are linear alternating polymers of carbon monoxide and at least one ethylenically unsaturated compound. Suitable ethylenically unsaturated compounds for use as the precursors of the polyketone polymers are hydrocarbons having up to 20 carbon atoms inclusive, preferably up to 10 carbon atoms inclusive, which are aliphatic such as ethene and other α-olefins including propene, 1-butene, isobutene, 1-hexene, 1-octene and 1-dodecene, or which are arylaliphatic containing an aryl substituent on a carbon atom of an otherwise aliphatic molecule, particularly an aryl substituent on a carbon atom of the ethylenic unsaturation. Illustrative of this latter class of ethylenically unsaturated hydrocarbons are styrene, p-methylstyrene, p-ethylstyrene and m-methylstyrene. However, hetero-atoms containing hydrocarbons such as unsaturated acids or esters, e.g. acrylates, are also suitable. Preferred polyketone polymers are copolymers of carbon monoxide and ethene or terpolymers of carbon monoxide, ethene and an ethylenically unsaturated hydrocarbon of at least 3 carbon atoms, particularly an α-olefin such as propene.

The structure of the polyketone polymers is that of a linear alternating polymer of carbon monoxide and ethylenically unsaturated compound and there will be within the polymer substantially one moiety of carbon monoxide for one moiety of unsaturated compound. When terpolymers are employed in the blends of the invention, typically there will be within the polymer chain at least two units incorporating a moiety of ethene for each unit incorporating a moiety of the second comonomeric compound. Preferably there will be from 10 units to 100 units incorporating a moiety of ethylene for each unit incorporating a moiety of the second compound (especially hydrocarbon). The polymer chain is then represented by the formula
$\{CO-(CH_2-CH_2)\}_x-\{CO-(D)\}_y-$
where D is the moiety of the hydrocarbon of at least 3 carbon atoms polymerized through the ethylenic unsaturation. The $-CO\{CH_2-CH_2\}$ units and the -CO-(D)- units are found randomly throughout the polymer chain and the ratio of y:x is preferably no more than 0.5. In the modification of the blends of the invention where copolymer of carbon monoxide and ethene is employed, there will be no second hydrocarbon present and such polymers are represented by the above formula wherein y = 0. When y is other than 0, i.e., terpolymers are employed, the ratio of y:x is more preferably from 0.01 to 0.1. The end groups or "caps" of the polymer chain will depend on what materials are present during the production of the polymer

and whether and how the polymer has been purified. The precise properties of the polymer will not depend on the end groups to any considerable extent so that the polymer is fairly represented by the above formula for the polymer chain. Of particular interest are the polyketones of a number average molecular weight from 1,000 to 200,000, especially those of molecular weight from 20,000 to 90,000 as determined by gel permeation chromatography (GPC). The physical properties of the polymers will depend in part on the molecular weight, whether the polymer is a copolymer or a terpolymer and the relative proportion of second hydrocarbon present in the case of terpolymers. Typical melting points are from 175 °C to 300 °C, more typically from 210 °C to 270 °C. The polymers have a limiting viscosity number (LVN) of from 0.5 to 10, preferably from 0.8 to 4, when measured m-cresol at 60 °C in a standard capillary viscosity measuring device.

A method of producing the polyketones which is now becoming conventional is to contact the carbon monoxide and hydrocarbon in the presence of a catalyst composition formed from a palladium compound, the anion of a non-hydrohalogenic acid having a pKa below 6 and a bidentate ligand of phosphorus.

The second component of the compositions of the invention is a polyvinylidene fluoride polymer. By polyvinylidene fluoride polymer is meant a polymer wherein at least a considerable predominance of the monomer units present is vinylidene fluoride, i.e., $CH_2=CF_2$. In preferred modifications the polyvinylidene polymer is a homopolymer of vinylidene fluoride. In other modifications, however, copolymers of at least 90% by mole of vinylidene fluoride are suitable with any remainder being other fluorinated monomeric moieties containing fluorine such as tetrafluoroethene, hexafluoropropene or vinyl fluoride. Such polyvinylidene fluoride polymers are well known in the art and are produced, for example, by conventional methods such as are described in US-2,435,537 and US-3,031,437, and in British patents 1,079,108; 1,094,558 and 1,190,999. The polyvinylidene fluoride polymers are thermoplastic in character having softening temperatures on the order of 145 °C to 190 °C and are conventionally used in films and coatings. Such polymers are commercially available.

The compositions of the invention comprise a mixture of a major proportion of the polyketone polymer and a minor proportion of the vinylidene fluoride polymer. The precise proportion of the polyvinylidene fluoride polymer is not critical and amounts of polyvinylidene fluoride polymer from 0.5% by weight to 45% by weight, based on total composition, are satisfactory. Amounts of polyvinylidene fluoride polymer from 1% by weight to 30% by weight on the same basis, are preferred.

The precise method of producing the blend of the polyketone polymer and the polyvinylidene polymer is not material so long as a uniform mixture of the components is obtained without undue degradation of the components or the resulting blend. The polyketone/polyvinylidene fluoride polymer blend is a non-miscible blend with the polyvinylidene fluoride polymer existing as a discrete phase in the polyketone matrix with a phase size on the order of from 0.8 micron to 2.2 microns, more often on the order of from 1.2 micron to 1.6 micron. The blends will not be homogeneous, of course, but satisfactory blends are obtained when the polyvinylidene fluoride polymer is uniformly distributed throughout the polyketone phase. The method of blending the polymeric components is that which is conventional for non-miscible polymeric materials. In one modification the polymeric components are blended in a corotating twin screw extruder. In an alternate modification the components are blended in a mixing device which exhibits high shear.

The blends of the invention may also include conventional additives such as antioxidants, stabilizers, fillers, fire resistant materials, mould release agents and other substances which are added to increase the processability of the polymers or modify the properties of the resulting blend. Such additives are added by conventional techniques prior to, together with or subsequent to the blending of the polyketone polymer and the polyvinylidene polymer.

The blends of the invention are characterized by improved melt stability and impact strength when compared to the properties of the polyketone polymer. The blends are processed by conventional methods such as extrusion and injection moulding into sheets, films, fibres and shaped articles. Illustrative of useful applications for the blends of the invention are the production of internal as well as external parts for automotive applications and structural parts such as sheets and cables for use in the construction industry.

The invention is further illustrated by the following Examples.

EXAMPLE 1

A. A linear alternating polymer of carbon monoxide, ethene and propene was produced in the presence of a catalyst composition formed from palladium acetate, the anion of trifluoroacetic acid and 1,3-bis(diphenylphosphino)propane. The melting point of the terpolymer was 221 °C and the polymer had a LVN of 1.48 when measured in m-cresol.

B. A blend of the polyketone polymer of paragraph A was made with 10% by volume of polyvinylidene fluoride sold under the trademark KYNAR 460. The polyketone polymer, the polyvinylidene polymer and approximately 0.2% by weight based on total polymer of a conventional hindered phenolic antioxidant to provide background stabilization, were processed through a 15 mm twin screw extruder. The extruder temperature was 240 °C operating with undried feed and under a nitrogen blanket. The extruder was operated at 300 RPM to produce a residence time of 0.5 minutes and the extruded strands were passed directly into water. The resulting polymeric blend had improved melt stability and impact resistance, and was non-miscible as evidenced by examination of cut samples under an electron microscope. The polyvinylidene polymer was present as a discrete phase having a particle size of approximately 1.4 micron in diameter.

EXAMPLE 2

A. A linear alternating polymer of carbon monoxide, ethene and propene was produced in the presence of a catalyst composition formed from palladium acetate, the anion of trifluoroacetic acid and 1,3-bis(diphenylphosphino)propane. The melting point of the terpolymer was 220 °C and the polymer had a LVN of 1.8 when measured in m-cresol.

B. A blend of the polyketone polymer of paragraph A was made with 20% by volume of the above identified polyvinylidene fluoride. The polyketone polymer, the polyvinylidene polymer and approximately 0.2% by weight based on total polymer of the same hindered phenolic antioxidant as in Example 1, were processed through a 15 mm twin screw extruder. The extruder temperature was 250 °C operating with undried feed and under a nitrogen blanket. The extruder was operated at 300 RPM to produce a residence time of 0.5 minutes and the extruded strands were passed directly into water. The resulting polymeric blend had significantly improved appearance and an impact strength better than the base polyketone polymer or the base polyvinylidene have on their own. Centre cut Notched Izod impact data for the blend and the base polymers are reported in Table I.

TABLE I

| Polyvinylidene fluoride (% by weight) | Notched Izod Rm Temp (m.kg/m) |
|---|---|
| 0 | 21 |
| 20 | 25 |
| 100 | 10 |

## Claims

1. A polyketone polymer composition characterized by comprising a non-miscible blend of

(a) a linear alternating polymer of carbon monoxide and at least one ethylenically unsaturated compound, and

(b) a polyvinylidene fluoride polymer.

2. A composition as claimed in claim 1, wherein the linear alternating polymer is represented by the formula

$$\{CO-(CH_2-CH_2)\}_x \{CO-(D)\}_y$$

wherein D is the moiety of an ethylenically unsaturated hydrocarbon of at least 3 carbon atoms polymerized through the ethylenic unsaturation and the ratio of y:x is no more than 0.5.

3. A composition as claimed in claim 2, wherein y = 0.

4. A composition as claimed in claim 2, wherein D is a moiety of propylene and the ratio of y:x is from 0.01 to 0.1.

5. A composition as claimed in any of claims 1-4, wherein the polyvinylidene fluoride polymer is homopolymeric vinylidene fluoride.

6. A composition as claimed in any of claims 1-4, wherein the polyvinylidene fluoride polymer has at least 90% of the monomeric units as vinylidene fluoride.

7. A composition as claimed in claim 6, wherein any monomeric moieties of the polyvinylidene fluoride polymer other than vinylidene fluoride are selected from moieties of tetrafluoroethylene, hexafluoropropylene, or vinyl fluoride.

8. A composition as claimed in any of claims 1-7, wherein the amount of polyvinylidene fluoride is from 0.5% to 45% by weight based on total composition.

9. A composition as claimed in claim 8, wherein the amount of polyvinylidene fluoride is from 1% to 30% by weight, based on total composition.

European Patent Office

# EUROPEAN SEARCH REPORT

Application Number

EP 89 20 1345

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 101 833 (E.I. DU PONT DE NOMOURS AND COMPANY)<br>* claims 1,5,7,10; page 3, lines 21-31; page 4, paragraph 3 *<br>--- | 1,2,4,5,8,9 | C 08 L 73/00<br>C 08 L 27/16 |
| A | FR-A-2 149 933 (E.I. DU PONT DE NOMOURS AND COMPANY)<br>* claims 1-4; page 7, comparative example *<br>----- | 1 | |

TECHNICAL FIELDS SEARCHED (Int. Cl.4)

C 08 L
C 08 G

The present search report has been drawn up for all claims

| Place of search | Date of completion of the search | Examiner |
|---|---|---|
| BERLIN | 28-08-1989 | VOIGTLAENDER R O J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........
& : member of the same patent family, corresponding document

EPO FORM 1503 03.82 (P0401)